(19) Europäisches Patentamt
European Patent Office
Office européen des brevets

(11) **EP 3 958 018 A1**

(12) **EUROPEAN PATENT APPLICATION**
published in accordance with Art. 153(4) EPC

(43) Date of publication:
**23.02.2022 Bulletin 2022/08**

(51) Int Cl.:
**G01S 17/894** (2020.01)   **G01S 17/32** (2020.01)

(21) Application number: **20923708.0**

(22) Date of filing: **18.06.2020**

(86) International application number:
**PCT/CN2020/096791**

(87) International publication number:
**WO 2021/253321 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHENZHEN GOODIX TECHNOLOGY CO., LTD.**
**Shenzhen, Guangdong 518045 (CN)**

(72) Inventors:
• **WANG, Hao-Jen**
  **Shenzhen, Guangdong 518045 (CN)**
• **LI, Chung-Te**
  **Shenzhen, Guangdong 518045 (CN)**
• **YANG, Meng-Ta**
  **Shenzhen, Guangdong 518045 (CN)**

(74) Representative: **Padial Martinez, Ana Belen**
  **Arochi & Lindner**
  **C/ Gurtubay № 6-3º Izquierda**
  **28001 Madrid (ES)**

(54) **TIME-OF-FLIGHT RANGING METHOD AND RELATED SYSTEM**

(57) A time-of-flight (TOF) distance measuring method and a TOF distance measuring system (100) are configured to measure a distance to a target (101). The TOF distance measuring method includes the following steps: sensing, by an optical sensor (140), a reflected light signal (LR) reflected by the target (101) and obtaining a phase shift (S520) between the reflected light signal (LR) and an incident light signal (LT), wherein the phase shift is smaller than $2\pi$; obtaining a plurality pieces of first depth information (Z1, Z2) (S530) according to the phase shift, wherein the plurality pieces of first depth information (Z1, Z2) are a plurality pieces of depth information with phase mixing (Z1, Z2); obtaining, by a processing unit (160), a disparity (d) of the reflected light signal (LR) corresponding to the incident light signal (LT) using epipolar geometry (S540); obtaining a second depth information (Z') according to the disparity (d) (S550); and obtaining the distance from the plurality pieces of first depth information (Z1, Z2) according to the second depth information (Z') (S560).

Fig. 5

**Description**

**TECHNICAL FIELD**

The present application relates to distance measuring and depth sense techniques, particularly, a time-of-flight distance measuring method and a related time-of-flight distance measuring system using structured light to detect the distance with respect to a target.

**BACKGROUND**

Time-of-flight distance measuring is done by measuring the phase difference between the incident and reflected light through a sensor, which has high complexity, high power consumption, and long computation time. In conventional art, the frequency of the light signal is increased to increase the accuracy. However, increasing the frequency of the light signal causes the wavelength to decrease, so that the phase ambiguity problem becomes serious due to the shorter wavelength for the same measurement distance. Therefore, the existing technology senses multiple light signals with different frequencies to ensure phase accuracy, and accordingly, the power consumption and operation time increase again. Therefore, how to solve the above-mentioned issues without compromising accuracy has become an important work task in this field.

**SUMMARY OF THE INVENTION**

One purpose of the present application is to disclose a time-of-flight (TOF) distance measuring method and a related system to address the technical problem of time-consuming and power-consuming of conventional TOF distance measuring methods.

One embodiment of the present application discloses a TOF distance measuring method, configured to measure a distance to a target. The TOF distance measuring method includes the following steps: sensing, by an optical sensor, a reflected light signal reflected by the target and obtaining a phase shift between the reflected light signal and an incident light signal, wherein the phase shift is smaller than $2\pi$; obtaining a plurality pieces of first depth information according to the phase shift; obtaining, by a processing unit, a disparity of the reflected light signal corresponding to the incident light signal; obtaining a second depth information according to the disparity; and obtaining the distance from the plurality pieces of first depth information according to the second depth information.

One embodiment of the present application discloses a TOF distance measuring system, configured to measure a distance to a target. The TOF distance measuring device includes an optical sensor and a processing unit. The optical sensor is configured to sense a reflected light signal reflected by the target. The processing unit is configured to obtain a phase shift between the reflected light signal and an incident light signal and a disparity of the reflected light signal corresponding to the incident light signal according to the reflected light signal sensed by the optical sensor, obtain a plurality pieces of first depth information according to phase shift, and obtain a second depth information according to the disparity, wherein the phase shift is smaller than $2\pi$. The processing unit is further configured to obtain the distance from a plurality pieces of first depth information according to the second depth information.

Specifically, the TOF distance measuring method disclosed in the present application solves the issue of phase ambiguity of TOF distance measuring in a novel way, thereby reducing the power consumption and processing time.

**BRIEF DESCRIPTION OF THE DRAWINGS**

FIG. 1 is a schematic block diagram illustrating a TOF distance measuring system according to embodiments of the present application.

FIG. 2 is a waveform diagram of a light signal during a sensing operation.

FIG. 3 is a schematic operating diagram illustrating a TOF distance measuring system according to embodiments of the present application.

FIG. 4 shows a geometric simulation of a TOF distance measuring system according to embodiments of the present application.

FIG. 5 is a flowchart of a TOF distance measuring method according to embodiments of the present application.

**DETAILED DESCRIPTION**

The following disclosure provides many different embodiments or examples for implementing different features of the present disclosure. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact and may also include embodiments in which additional features may be formed between the first and second features, such that the first and second features may not be in direct contact. In addition, the present disclosure may repeat reference numerals and/or letters in the various embodiments. This repetition is for the purpose of simplicity and clarity and does not in itself dictate a relationship between the various embodiments and/or configurations discussed.

There are three main implementations of existing three-dimensional (3D) image sensors: stereo binocular, structured light, and time-of-flight (TOF). Usually, in TOF implementation, the sensor is used to measure the time-of-flight of the light signal and then combined with the speed of light to calculate the TOF distance, i.e., the distance between the sensor and the object to be measured, where the time-of-flight of the light signal is inferred from the phase delay between the transmitted laser and the returned laser.

However, the length of the distance to the target (i.e., the object to be measured) may cause the above phase delay to exceed one cycle (i.e., $2\pi$), i.e., the phase blurring caused by phase mixing.

Therefore, it is necessary to use the disparity of the light signal to help determine how many cycles of the above phase delay overlap to obtain the distance to the target. The details are described below.

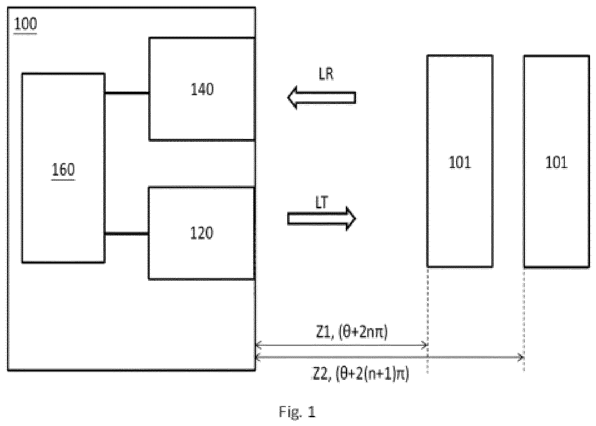

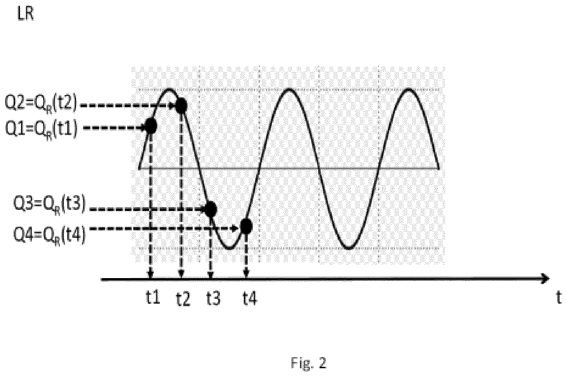

FIG. 1 is a schematic block diagram illustrating a TOF distance measuring system 100 according to embodiments of the present application. Referring to FIG. 1, the TOF distance measuring system 100 is configured to sense a phase shift $\theta$ between an incident light signal LT and a reflected light signal LR and calculate the distance to the target 101 based on the frequency of the incident light signal LT, and the phase shift $\theta$, wherein the incident light signal LT and the reflected light signal LR are laser signals. Generally, the phase shift $\theta$ is smaller than $2\pi$; however, as discussed above, if the frequency of the transmitted incident light signal LT is higher or the distance to be measured is too long, the actual phase may be delayed to be greater than $2\pi$. That is, the phase delay is equal to $\theta + 2n\pi$ (n is an integer). For example, when the phase delay is equal to $\theta + 2n\pi$, the calculated depth information with respect to the target 101 is Z1, whereas when the phase delay is equal to $[\theta + 2(n+1)\pi]$, the calculated depth information with respect to the target 101 is Z2. In the present embodiment, the depth information Z2 differs from the depth information Z1 by the length of the wavelength of one incident light signal LT. Embodiments shown in FIG. 2 to FIG. 4 describe TOF distance measuring methods capable of determining the value of the parameter n of the phase delay $\theta + 2n\pi$ and calculating the actual distance Z accordingly. Compared with conventional approaches, the method of the present application can reduce the number of times of the irradiation of the incident light signal, and since irradiating the incident light signal requires extensive energy and occupies the operation time of each frame, the power consumption of the TOF distance measuring system 100 can be reduced, and the frame rate can be maintained.

The TOF distance measuring system 100 includes a light-emitting device 120, an optical sensor 140, and a processing unit 160. The light-emitting device 120 is configured to transmit the incident light signal LT to the target 101. The optical sensor 140 is configured to receive the reflected light signal LR reflected from the target 101 and generate an electronic signal based on the reflected light signal LR that it receives. The processing unit 160 is coupled to the light-emitting device 120 and the optical sensor 140 and configured to control the operation of the light-emitting device 120 and the optical sensor 140, for example, using a clock signal to control the on and off of the light-emitting device 120 and the optical sensor 140. The processing unit 160 is further configured to process the electronic signal generated by the optical sensor 140. In some embodiments, the processing unit 160 includes a microcontroller unit (MCU), central processing unit (CPU), or graphics processing unit (GPU).

Since the phase of the incident light signal LT transmitted by the light-emitting device 120 is known, after the optical sensor 140 receives the reflected light signal LR, it can determine the phase shift $\theta$. For clarity, the incident light signal LT and the reflected light signal LR can be expressed as the following signal Equations 1 and 2.

$$LT: Q_T(t) = A cos(ft) + B \text{ (Equation 1)}$$

$$LR: Q_R(t) = A' cos(ft + \theta + 2n\pi) + B' \text{ (Equation 2)},$$

where, A and A' represent the amplitude, f represents the frequency, t represents the time, and B represents the noise generated in the TOF distance measuring system 100. Specifically, when the light-emitting device 120 generates the incident light signal LT, it collaterally generates a system noise B. When the system noise B is reflected by the target into B', it is reflected back to the optical sensor 140 together with the reflected light signal LR.

Referring to FIG. 2, when measuring the phase shift θ, the light-emitting device 120 generates the incident light signal LT to irradiate the target 101, and the optical sensor 140 respectively senses the light intensities Q1, Q2, Q3, and Q4 of the reflected light signal LR changing with phase at four different time points t1, t2, t3, and t4. In some embodiments, the light-emitting device 120 generates the incident light signal LT to irradiate the target 101 four times, and during each irradiation, the optical sensor 140 only senses one of the light intensities Q1, Q2, Q3, and Q4 (i.e., obtain four images). Because the frequency f of the incident light signal LT is known, and after the reflection, the frequency of the reflected light signal LR remains unchanged, substituting time points t1, t2, t3, and t4 and light intensities Q1, Q2, Q3, and Q4 into the Equation 2 of the reflected light signal LR, one can obtain the amplitude A', the phase shift θ, and the system noise B'. In the present embodiment, the phase shift θ is a value smaller than $2\pi$.

To ease of calculation, the time points t1 and t3 are chosen to be half a cycle apart. Converted into a phase change, the phase changes by $\pi$ from time point t1 to t3, for example, from 0° to 180°. Correspondingly, the time points t2 and t4 are also chosen to be half a cycle apart, for example, from 90° to 270°. Under this condition, Equation 2 of the reflected light signal LR can be solved as follows.

$$\theta = tan^{-1}\frac{-(Q3-Q1)\times sin\,(k)}{(Q3-Q1)\times cos(k)-(Q4-Q2)} \text{ (Equation 3)}$$

$$A' = \frac{A1+A2+A3+A4}{cos^2\theta+cos(\theta+k)^2+cos(\theta+\pi)^2+cos(\theta+\pi+k)^2} \text{ (Equation 4)}$$

$$B' = \frac{Q1+Q2+Q3+Q4}{4} \text{ (Equation 5)},$$

where, k is the phase change between time points t2 and t1, and parameters A1-A4 can be expressed as the following Equations.

$$A1 = (Q1 - B)\times cos\theta \text{ (Equation 6)}$$

$$A2 = (Q2 - B)\times cos\,(\theta + k)\;\text{ (Equation 7)}$$

$$A3 = (Q3 - B)\times cos\,(\theta + \pi)\;\text{ (Equation 8)}$$

$$A4 = (Q4 - B)\times cos\,(\theta + \pi + k)\;\text{ (Equation 9)}$$

In some embodiments, k is set as $0.5\pi$ to further simplify the parameters of the Equation of the reflected light signal LR as follows.

$$\theta = tan^{-1}\frac{Q3-Q1}{Q4-Q2} \text{ (Equation 10)}$$

$$A' = \frac{\sqrt{(Q1-Q3)^2+(Q2-Q4)^2}}{2} \text{ (Equation 11)}$$

The phase shift θ can be calculated by using light intensities Q1-Q4, and hence, a plurality of possible values (a plurality of different n) of the phase delay $\theta+2n\pi$ can be obtained. The processing unit 160 uses the phase delay $\theta+2n\pi$ to obtain a plurality pieces of possible depth information Z(n). The depth information Z(n) can be expressed as the following Equations.

$$Z(n) = \frac{c}{4\pi f}(\theta + 2n\pi) \text{ (Equation 12)}$$

wherein c is the speed of light.

However, the TOF distance measuring system 100 cannot determine the actual n value of the phase delay $\theta + 2n\pi$ based on the incident light signal LT and the reflected light signal LR alone. Therefore, the TOF distance measuring system 100 needs to use the disparity d between the incident light signal LT and the reflected light signal to obtain the actual distance Z from the plurality pieces of possible depth information Z(n). The details are discussed below.

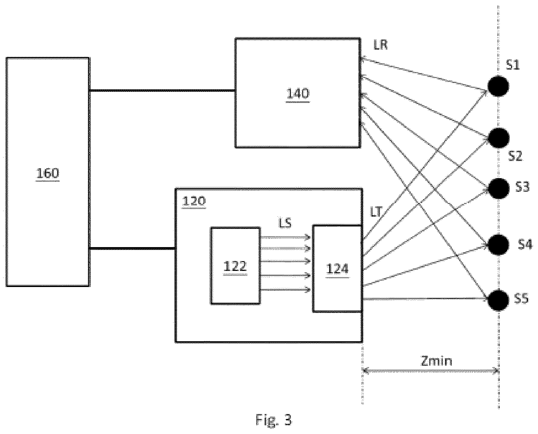

Reference is made to FIG. 3. To obtain the disparity d between the incident light signal LT and the reflected light signal LR, the light-emitting device 120 generates light having a predetermined pattern, such as structured light, as the incident light signal LT, and the optical sensor 140 then senses the reflected light signal LR so that the processing unit 160 obtains the disparity d based on the pattern on the reflected light signal LR and the pattern on the incident light signal LT. In one example, the incident light LT may be a matrix distribution of scattered light.

The light-emitting device 120 includes a light source 122 and an optical microstructure 124. The light source 122 generates a laser signal LS to irradiate the optical microstructure124, and the optical microstructure124 changes the path of the laser signal LS to generate the incident light signal LT. In the present embodiment, the incident light signal LT has a predetermined pattern to that the energy is concentrated on the predetermined pattern. In the embodiment shown in FIG. 3, the projection of the incident light signal LT on the target 101 forms a light spot pattern with a plurality of light spots S1-S5 separated from each other.

For example (however, the present disclosure is not limited thereto), the optical microstructure 124 includes a diffractive optical element (DOE) or refractive optical element (ROE), configured to conically diffract (or conically refract) the laser signal LS to generate the incident light signal LT, so that the projection of the incident light signal LT on the target 101 forms a plurality of light spots that are separated from each other. In certain embodiments, a collimating lens is further arranged between the light source 122 and the optical microstructure124, wherein the collimating lens is configured to direct the laser signal LS into parallel light.

The number of light spots S1-S5 shown in FIG. 3 is for illustrative purposes only and is not intended to limit the number of light spots of the present application. For example, in some embodiments, the light source 122 generates a laser signal LS including a laser matrix consisting of M laser beams. When the laser matrix passes the optical microstructure124, the optical microstructure124 replicates each laser beam of the laser matrix into n*n laser beams to form M*n*n light spots on the target 101. M and n are positive integers.

After the optical sensor 140 receives the reflected light signal LR having the pattern of the plurality of light spots S1-S5, the processing unit 160 uses epipolar geometry to calculate the disparity d of the pattern of each light spot S1-S5, and then uses the disparity d to calculate the depth information Z', which can be expressed as the following Equations.

$$Z' = \frac{b \times F}{d} \text{ (Equation 13)}$$

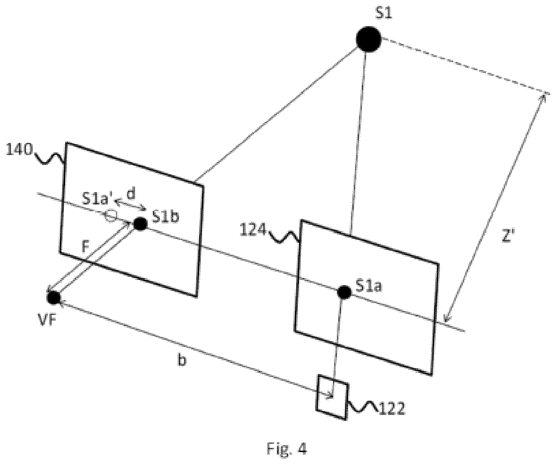

wherein b represents a baseline distance in the epipolar geometry, and F represents the focal length of the optical sensor 140. For example, referring to FIG. 4, the offset distance between the coordinates of the light spot S1 on the optical microstructure 124 (first imaging surface) S1a and the coordinates on the optical sensor 140 (second imaging surface) S1b is the disparity d, wherein a corresponded position of S1a of the optical sensor 140 is S1a', and the disparity d is the difference between S1a' and S1b. The distance Z' of the light spot S1 on the target 101 with respect to the TOF distance measuring system 100 is known from the baseline distance b and the focal length F, wherein the baseline distance b is the distance from the light source 122 to the virtual focal point VF behind the optical sensor 140.

Since the epipolar geometry performs the calculation based on geometrical optics, the computed disparity d is free of phase ambiguity. However, because the geometric optics itself has errors after all, the calculation of the depth information Z' has a certain degree of error. In this case, the processing unit 160 may determine which of the depth information Z(n) is the actual distance Z according to the depth information Z'.

During the process of obtaining the true distance Z, the processing unit 160 first compares the depth information Z' to a plurality of depth information Z(n) with different n values, then selects one of the plurality of depth information Z(n) that is closest to the depth information Z', and finally decides that the selected depth information Z(n) is the actual distance Z. In some embodiments, the processing unit 160 subtracts the plurality of depth information Z (n) from the depth information Z' respectively to take the absolute values, then selects the smallest one from the plurality of absolute values, and then decides that the depth information Z(n) corresponding to the selected absolute value is the actual distance Z.

In addition, the disparity d varies with the distance Z of the target. From Equation 13, it is known that the disparity d is inversely proportional to the distance Z'. For the same incident light signal LT and the target 101, the disparity d is larger when the distance Z is closer, and smaller when the distance Z is further. Taking FIG. 1 as an example, when the light spots S1-S5 are reflected back at a depth of Zl, the disparity d is larger than the disparity d when the light spots S1-S5 are projected back at Z2. In order to avoid mutual interference when the light spots S1-S5 reflect back to the optical sensor 140, the light-emitting device 120 must control the spacing between the light spots S1-S5 not to be too dense so that the light spots S1-S5 can be clearly identified when they reflect back to the optical sensor 140. Specifically, because the disparity d is inversely proportional to the distance Z, the light-emitting device 120 determines the spacing between the light spots S1 to S5 based on the shortest measurement distance Zmin of the TOF distance measuring system 100 to ensure that the light spots S1 to S5 can be clearly identified even after being affected by the maximum value bxF/Zmin of the disparity d (refer to Equation 13), and the adjacent spots S1 to S5 will not be interfered by each other.

In some embodiments, the light-emitting device 120 controls the incident light signal LT to have a pattern of regularly arranged light spots. In some embodiments, the light-emitting device 120 controls the incident light signal LT to have a pattern of irregularly arranged light spots, wherein the spacing of all light spots from adjacent light spots conforms to the limit of the shortest measurement distance Zmin of the TOF distance measuring system 100.

In summary, compared with the conventional art, the TOF distance measuring system 100 does not need to additionally emit a light signal with a different frequency f to assist in determining the n value, thus reducing the number of times the incident light signal LT is irradiated, and obtaining the actual distance Z with respect to the target with the aid of the disparity d to solve the problem of phase ambiguity. Under a condition that the accuracy of sensing is not reduced, the TOF distance measuring system 100 reduces the system's power consumption and does not reduce the frame rate because it reduces the number of times the incident light signal LT is irradiated.

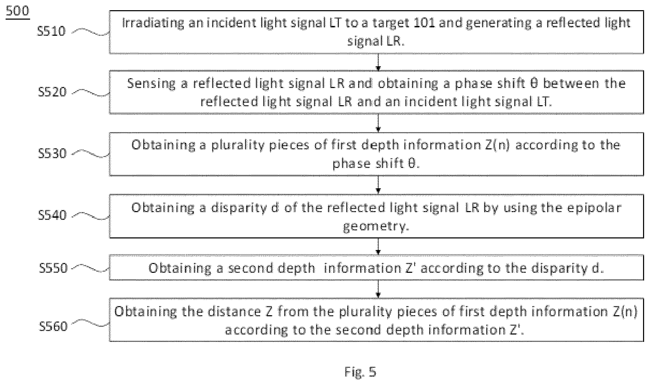

In view of the foregoing, the TOF distance measuring system 100 of the present application can use the TOF distance measuring method 500 in FIG. 5 to sense the distance Z from the target 101. First, the light-emitting device 120 generates an incident light signal LT, which irradiates the target 101 to generate a reflected light signal LR (S510). The optical sensor 140 then senses the reflected light signal LR, so that the processing unit 160 obtains the phase shift $\theta$ between the reflected light signal LR and the incident light signal LT according to the sensed reflected light signal LR (S520) and obtains a plurality pieces of depth information Z(n) based on the phase shift $\theta$ (S530). The processing unit 160 then uses the epipolar geometry to obtain the disparity d between the reflected light signal LR and the incident light signal LT (S540) and obtain the depth information Z' based on the disparity d (S550). Finally, the distance Z with respect to the target 101 is obtained from the plurality pieces of depth information Z(n) based on depth information Z' (S560).

## Claims

1. A time-of-flight (TOF) distance measuring method, configured to measure a distance to a target, **characterized by** comprising:

   sensing, by an optical sensor, a reflected light signal reflected by the target and obtaining a phase shift between the reflected light signal and an incident light signal, wherein the phase shift is smaller than $2\pi$;
   obtaining a plurality pieces of first depth information according to the phase shift, wherein the plurality pieces of first depth information are a plurality pieces of depth information with phase mixing;
   obtaining, by a processing unit, a disparity of the reflected light signal corresponding to the incident light signal;
   obtaining a second depth information according to the disparity; and
   obtaining the distance from the plurality pieces of first depth information according to the second depth information.

2. The TOF distance measuring method of claim 1, **characterized in that** the incident light signal is a structured light signal.

3. The TOF distance measuring method of claim 1 or 2, **characterized in that** the step of obtaining the distance from the plurality pieces of first depth information comprises:

   comparing the plurality pieces of first depth information to the second depth information;
   selecting a first depth information that is closest to the second depth information from the plurality pieces of first depth information; and
   determining that the selected first depth information is the distance.

4. The TOF distance measuring method of any of claims 1 to 3, **characterized by** further comprising:
   irradiating, by a light-emitting device, the incident light signal to the target and generating the reflected light signal, wherein the incident light signal has a plurality of light spots, wherein the plurality of light spots have a minimum spacing therebetween, wherein the minimum spacing is related to a minimum measurable distance of the TOF distance measuring method, wherein after the incident light signal is reflected to the optical sensor at the minimum measurable distance, the plurality of light spots of the incident light signal do not overlap with each other after being reflected.

**5.** The TOF distance measuring method of claim 4, **characterized in that** the step of obtaining, by the processing unit, the disparity of the reflected light signal corresponding to the incident light signal comprises:
obtaining the disparity of the plurality of light spots according to a distance between the light-emitting device and the optical sensor and using epipolar geometry.

**6.** The TOF distance measuring method of claim 4, **characterized in that** the step of irradiating the incident light signal to the target and generating the reflected light signal further comprises:

generating, by a light source a laser signal, wherein the laser signal comprises a laser matrix consisting of M lasers; and
changing, by an optical microstructure, a path of the laser signal to generate the incident light signal, wherein the plurality of light spots are obtained by using the optical microstructure to convert the laser matrix into M*n*n light spots,
wherein M and n are positive integers.

**7.** The TOF distance measuring method of any of claims 4 to 6, **characterized in that** the plurality of light spots are arranged regularly.

**8.** The TOF distance measuring method of any of claims 1 to 7, **characterized by** further comprising:
irradiating, by a light-emitting device, the incident light signal to the target 4 times, wherein the step of sensing the reflected light signal reflected by the target further comprises:
during each irradiation, respectively sensing the reflected light signal in a first phase, a second phase, a third phase, and a fourth phase, wherein the third phase differs by $\pi$ from the first phase, and the fourth phase differs by $\pi$ from the second phase.

**9.** The TOF distance measuring method of claim 8, **characterized in that** the second phase differs by $0.5\pi$ from the first phase.

**10.** A time-of-flight (TOF) distance measuring system, configured to measure a distance to a target, **characterized by** comprising:

an optical sensor, configured to sense a reflected light signal reflected by the target;
a processing unit, configured to obtain a phase shift between the reflected light signal and incident light signal and a disparity of the reflected light signal corresponding to the incident light signal according to the reflected light signal sensed by the optical sensor, obtain a plurality pieces of first depth information according to the phase shift, and obtain a second depth information according to the disparity, wherein the phase shift is smaller than $2\pi$, and the plurality pieces of first depth information are a plurality pieces of depth information with phase mixing,
wherein the processing unit is further configured to obtain the distance from the plurality pieces of first depth information according to the second depth information.

**11.** The TOF distance measuring system of claim 10, **characterized in that** the incident light signal is a structured light signal.

**12.** The TOF distance measuring system of claim 10 or 11, **characterized in that** the processing unit is further configured to compare the plurality pieces of first depth information to the second depth information, and select a first depth information that is closest to the second depth information from the plurality pieces of first depth information so as to determine that the selected first depth information is the distance.

**13.** The TOF distance measuring system of any of claims 10 to 12, **characterized by** further comprising:
a light-emitting device, configured to irradiate the incident light signal to the target to generate the reflected light signal, wherein the incident light signal has a plurality of light spots, wherein the plurality of light spots have a minimum spacing therebetween, wherein the minimum spacing is related to a minimum measurable distance of the TOF distance measuring system, wherein after the incident light signal is reflected to the optical sensor at the minimum measurable distance, the plurality of light spots of the incident light signal do not overlap with each other after being reflected.

**14.** The TOF distance measuring system of claim 13, **characterized in that** the processing unit is further configured to obtain the disparity of the plurality of light spots according to the distance between the light-emitting device and the optical sensor using epipolar geometry.

**15.** The TOF distance measuring system of claim 13, **characterized in that** the light-emitting device comprise:

a light source, configured to generate a laser signal, wherein the laser signal comprises a laser matrix consisting of M lasers; and
an optical microstructure, configured to change a path of the laser signal to generate the incident light signal, wherein the plurality of light spots are obtained by using the optical microstructure to convert the laser matrix into M*n*n light spots,
wherein M and n are positive integers.

**16.** The TOF distance measuring system of any of claims 13 to 15, **characterized in that**, the plurality of light spots are arranged regularly.

**17.** The TOF distance measuring system of claim 11 or 12, **characterized by** further comprising:

a light-emitting device, configured to irradiate the incident light signal to the target 4 times,
wherein the optical sensor is further configured to, during each irradiation, respectively sensing the reflected light signal in a first phase, a second phase, a third phase, and a fourth phase, wherein the third phase differs by $\pi$ from the first phase, and the fourth phase differs by $\pi$ from the second phase.

**18.** The TOF distance measuring system of claim 17, **characterized in that** the second phase differs by $0.5\pi$ from the first phase.

**Amended claims under Art. 19.1 PCT**

**1.** A time-of-flight (TOF) distance measuring method, configured to measure a distance to a target, **characterized by** comprising:

sensing, by an optical sensor, a reflected light signal reflected by the target and obtaining a phase shift between the reflected light signal and an incident light signal, wherein the phase shift is smaller than $2\pi$;
obtaining a plurality pieces of first depth information according to the phase shift, wherein the plurality pieces of first depth information are a plurality pieces of depth information with phase mixing;
obtaining, by a processing unit, a disparity of the reflected light signal corresponding to the incident light signal;
obtaining a second depth information according to the disparity; and
obtaining the distance from the plurality pieces of first depth information according to the second depth information.

**2.** The TOF distance measuring method of claim 1, **characterized in that** the incident light signal is a structured light signal.

**3.** The TOF distance measuring method of claim 1 or 2, **characterized in that** the step of obtaining the distance from the plurality pieces of first depth information comprises:

comparing the plurality pieces of first depth information to the second depth information;
selecting a first depth information that is closest to the second depth information from the plurality pieces of first depth information; and
determining that the selected first depth information is the distance.

**4.** The TOF distance measuring method of any of claims 1 to 3, **characterized by** further comprising:

irradiating, by a light-emitting device, the incident light signal to the target and generating the reflected light signal, wherein the incident light signal has a plurality of light spots, wherein the plurality of light spots have a minimum spacing therebetween, wherein the minimum spacing is related to a minimum measurable distance of the TOF distance measuring method, wherein after the incident light signal is reflected to the optical sensor at the minimum measurable distance, the plurality of light spots of the incident light signal do not overlap with each other after being reflected.

5. The TOF distance measuring method of claim 4, **characterized in that** the step of obtaining, by the processing unit, the disparity of the reflected light signal corresponding to the incident light signal comprises:
obtaining the disparity of the plurality of light spots according to a distance between the light-emitting device and the optical sensor and using epipolar geometry.

6. The TOF distance measuring method of claim 4, **characterized in that** the step of irradiating the incident light signal to the target and generating the reflected light signal further comprises:

   generating, by a light source a laser signal, wherein the laser signal comprises a laser matrix consisting of M lasers; and
   changing, by an optical microstructure, a path of the laser signal to generate the incident light signal, wherein the plurality of light spots are obtained by using the optical microstructure to convert the laser matrix into M*n*n light spots,
   wherein M and n are positive integers.

7. The TOF distance measuring method of any of claims 4 to 6, **characterized in that** the plurality of light spots are arranged regularly.

8. The TOF distance measuring method of any of claims 1 to 7, **characterized by** further comprising:

   irradiating, by a light-emitting device, the incident light signal to the target 4 times,
   wherein the step of sensing the reflected light signal reflected by the target further comprises:
   during each irradiation, respectively sensing the reflected light signal in a first phase, a second phase, a third phase, and a fourth phase, wherein the third phase differs by $\pi$ from the first phase, and the fourth phase differs by $\pi$ from the second phase.

9. The TOF distance measuring method of claim 8, **characterized in that** the second phase differs by $0.5\pi$ from the first phase.

10. A time-of-flight (TOF) distance measuring system, configured to measure a distance to a target, **characterized by** comprising:

    an optical sensor, configured to sense a reflected light signal reflected by the target;
    a processing unit, configured to obtain a phase shift between the reflected light signal and incident light signal and a disparity of the reflected light signal corresponding to the incident light signal according to the reflected light signal sensed by the optical sensor, obtain a plurality pieces of first depth information according to the phase shift, and obtain a second depth information according to the disparity, wherein the phase shift is smaller than $2\pi$, and the plurality pieces of first depth information are a plurality pieces of depth information with phase mixing,
    wherein the processing unit is further configured to obtain the distance from the plurality pieces of first depth information according to the second depth information.

11. The TOF distance measuring system of claim 10, **characterized in that** the incident light signal is a structured light signal.

12. The TOF distance measuring system of claim 10 or 11, **characterized in that** the processing unit is further configured to compare the plurality pieces of first depth information to the second depth information, and select a first depth information that is closest to the second depth information from the plurality pieces of first depth information so as to determine that the selected first depth information is the distance.

13. The TOF distance measuring system of any of claims 10 to 12, **characterized by** further comprising:

a light-emitting device, configured to irradiate the incident light signal to the target to generate the reflected light signal, wherein the incident light signal has a plurality of light spots, wherein the plurality of light spots have a minimum spacing therebetween, wherein the minimum spacing is related to a minimum measurable distance of the TOF distance measuring system, wherein after the incident light signal is reflected to the optical sensor at the minimum measurable distance, the plurality of light spots of the incident light signal do not overlap with each other after being reflected.

14. The TOF distance measuring system of claim 13, **characterized in that** the processing unit is further configured to obtain the disparity of the plurality of light spots according to the distance between the light-emitting device and the optical sensor using epipolar geometry.

15. The TOF distance measuring system of claim 13, **characterized in that** the light-emitting device comprise:

a light source, configured to generate a laser signal, wherein the laser signal comprises a laser matrix consisting of M lasers; and
an optical microstructure, configured to change a path of the laser signal to generate the incident light signal, wherein the plurality of light spots are obtained by using the optical microstructure to convert the laser matrix into M*n*n light spots, the plurality of light spots are arranged regularly,
wherein M and n are positive integers.

Fig. 1

LR

Q2=$Q_R$(t2)

Q1=$Q_R$(t1)

Q3=$Q_R$(t3)

Q4=$Q_R$(t4)

t1  t2  t3  t4

t

Fig. 2

Fig. 3

Fig. 4

500

S510 — Irradiating an incident light signal LT to a target 101 and generating a reflected light signal LR.

S520 — Sensing a reflected light signal LR and obtaining a phase shift θ between the reflected light signal LR and an incident light signal LT.

S530 — Obtaining a plurality pieces of first depth information Z(n) according to the phase shift θ.

S540 — Obtaining a disparity d of the reflected light signal LR by using the epipolar geometry.

S550 — Obtaining a second depth information Z' according to the disparity d.

S560 — Obtaining the distance Z from the plurality pieces of first depth information Z(n) according to the second depth information Z'.

Fig. 5

## INTERNATIONAL SEARCH REPORT

| International application No. |
| --- |
| **PCT/CN2020/096791** |

**A. CLASSIFICATION OF SUBJECT MATTER**

G01S 17/894(2020.01)i; G01S 17/32(2020.01)i

According to International Patent Classification (IPC) or to both national classification and IPC

**B. FIELDS SEARCHED**

Minimum documentation searched (classification system followed by classification symbols)

G01S17/-

Documentation searched other than minimum documentation to the extent that such documents are included in the fields searched

Electronic data base consulted during the international search (name of data base and, where practicable, search terms used)

CNKI, CNPAT, WPI, EPODOC: 深圳市汇顶科技股份有限公司, 飞时, 飞行时间, 测距, 距离, 深度, 相位, 差, 移相, 相移, 模糊, 整周, 不确定, 解缠, 缠绕, 解包裹, 包裹, 绝对相位, 相对相位, 四相位, 四步移相, 四, 采样, 成像, 检测, 测量, 对极几何, 像差, 视差, 结构光, 散斑, 散点, 斑点, 图案, 图形, 衍射, 散射, TOF, time, flight, distance, range, depth, phase, change, difference, different, shift, four, image, detect, sample, uncertain, wrap, unwrap, epipolar, geometry, pixel, baseline, diffraction, optical, refractive, DOE, ROE, pattern

**C. DOCUMENTS CONSIDERED TO BE RELEVANT**

| Category* | Citation of document, with indication, where appropriate, of the relevant passages | Relevant to claim No. |
| --- | --- | --- |
| Y | CN 111239729 A (XI'AN JIAOTONG UNIVERSITY) 05 June 2020 (2020-06-05) description, paragraphs [0021]-[0068] | 1-18 |
| Y | CN 108333591 A (SUZHOU INSTITUTE OF NANO-TECH AND NANO-BIONICS (SINANO), CAS et al.) 27 July 2018 (2018-07-27) description, paragraphs [0049]-[0068] | 1-18 |
| Y | CN 105303572 A (XIDIAN UNIVERSITY) 03 February 2016 (2016-02-03) description, paragraphs [0054]-[0075] | 1-18 |
| A | CN 105844633 A (XIDIAN UNIVERSITY) 10 August 2016 (2016-08-10) entire document | 1-18 |
| A | CN 109798838 A (XI'AN JIAOTONG UNIVERSITY) 24 May 2019 (2019-05-24) entire document | 1-18 |
| A | JP 2013104784 A (MITSUBISHI ELECTRIC CORP.) 30 May 2013 (2013-05-30) entire document | 1-18 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 February 2021** | **17 March 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/096791** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2018036144 A (CANON K. K.) 08 March 2018 (2018-03-08)<br>    entire document | 1-18 |

Form PCT/ISA/210 (second sheet) (January 2015)

**INTERNATIONAL SEARCH REPORT**
Information on patent family members

International application No.

**PCT/CN2020/096791**

| Patent document cited in search report | | | Publication date (day/month/year) | Patent family member(s) | | | Publication date (day/month/year) |
|---|---|---|---|---|---|---|---|
| CN | 111239729 | A | 05 June 2020 | None | | | |
| CN | 108333591 | A | 27 July 2018 | None | | | |
| CN | 105303572 | A | 03 February 2016 | CN | 105303572 | B | 25 May 2018 |
| CN | 105844633 | A | 10 August 2016 | CN | 105844633 | B | 26 March 2019 |
| CN | 109798838 | A | 24 May 2019 | CN | 109798838 | B | 27 October 2020 |
| | | | | US | 2020201064 | A1 | 25 June 2020 |
| JP | 2013104784 | A | 30 May 2013 | None | | | |
| JP | 2018036144 | A | 08 March 2018 | None | | | |

Form PCT/ISA/210 (patent family annex) (January 2015)